Europäisches Patentamt

European Patent Office

Office européen des brevets

(11) Veröffentlichungsnummer : **0 343 565 B1**

(12) **EUROPÄISCHE PATENTSCHRIFT**

(51) Int. Cl.⁵ : **F02B 29/04,** F28F 9/00, F16J 15/10

(45) Veröffentlichungstag der Patentschrift :
**12.08.92 Patentblatt 92/33**

(21) Anmeldenummer : **89109181.1**

(22) Anmeldetag : **22.05.89**

(54) **Ladeluftkühler, Dichtung und Verfahren zum Zusammenbau des Ladeluftkühlers.**

(30) Priorität : **26.05.88 US 198884**

(43) Veröffentlichungstag der Anmeldung :
**29.11.89 Patentblatt 89/48**

(45) Bekanntmachung des Hinweises auf die
Patenterteilung :
**12.08.92 Patentblatt 92/33**

(84) Benannte Vertragsstaaten :
**BE DE FR GB IT SE**

(56) Entgegenhaltungen :
DE-A- 2 302 855
FR-A- 1 319 072
GB-A- 548 270

(56) Entgegenhaltungen :
GB-A- 2 127 896
US-A- 2 599 767
US-A- 4 191 148
US-A- 4 436 145

(73) Patentinhaber : **DEERE & COMPANY**
**1 John Deere Road**
**Moline, Illinois 61265 (US)**

(72) Erfinder : **Neebel, Dennis Richard**
**2133 N.W. Lester Avenue**
**Corvallis Oregon 97330 (US)**

(74) Vertreter : **Feldmann, Bernhard et al**
**DEERE & COMPANY European Office, Patent**
**Department Steubenstrasse 36-42 Postfach**
**503**
**W-6800 Mannheim 1 (DE)**

## Beschreibung

Die Erfindung betrifft einen Ladeluftkühler mit einem Gehäuse, welches wenigstens eine Lufteintrittsöffnung aufweist, und einem Ladeluftverteilerstück, welches Luftaustrittsöffnungen aufweist, wobei das Gehäuse und das Ladeluftverteilerstück miteinander mittels Dichtungen luftdicht verschraubbar sind und in ihrem Innern einen Kühlerkern aufnehmen, welcher wenigstens einen Eintrittsstutzen und einen Austrittsstutzen zur Kühlmittelversorgung aufweist. Die durch das Gehäuse bzw. das Ladeluftverteilerstück verlaufenden Durchtrittsstellen des Eintrittsstutzens und des Austrittsstutzens sind luftdicht abgedichtet. Die Erfindung betrifft ferner eine Dichtung zur Abdichtung des Durchtrittsbereiches der Kühlmittelanschlüsse und ein Verfahren zum Zusammenbau des Ladeluftkühlers.

Durch die Verwendung von Abgasturboladern oder Vorverdichtern läßt sich die Ausgangsleistung von Verbrennungskraftmaschinen steigern, indem die von der Maschine angesaugte Luft komprimiert wird. Wird Luft auf diese Weise komprimiert, so erwärmt sie sich. Da kältere Luft bei gleichem Druck eine höhere Dichte aufweist als erwärmte Luft, kann die Luftdichte dadurch gesteigert werden, daß die Luft nach dem Verdichten abgekühlt wird. Für eine maximale Verdichtung wird daher die Luft zuerst durch einen Turbolader oder einen Vorverdichter verdichtet und anschließend abgekühlt, bevor sie in den Einlaßkrümmer der Maschine eingespeist wird. Hierzu wird die Luft über einen Zwischen- oder Ladeluftkühler geleitet, bevor sie der Maschine zugeführt wird.

Ein Ladeluftkühler ist im wesentlichen ein spezieller Typ eines Wärmetauschers. Der Kühlerblock besteht gewöhnlich aus einer oder mehreren kühlflüssigkeitsdurchströmten Röhren, von denen mehrere Rippen abstehen. Die von dem Turbolader komprimierte Luft wird an diesen Rippen vorbei gedrückt, bevor sie zu dem Einlaßkrümmer der Maschine gelangt.

Es sind eine Vielzahl von Ladeluftkühlerkonstruktionen bekannt geworden. Alle diese Konstruktionen erfordern ein den Kühlerkern umgebendes, im wesentlichen luftdichtes Gehäuse, so daß die verdichtete Luft ohne Verluste an den Rippen vorbeigeführt wird. Die Abdichtung des Kühlerkernes in dem Gehäuse des Ladeluftkühlers ist bei den bekannten Konstruktionen jedoch ziemlich kompliziert ausgebildet.

Beispielsweise findet bei bekannten Ackerschleppern ein Ladeluftkühler gemäß den eingangs genannten Merkmalen Verwendung, dessen Kühlmitteleintrittsanschluß und Kühlmittelaustrittsanschluß sich an gegenüberliegenden Seiten des Kühlerkernes befinden. Zur Abdichtung dieser Anschlüsse gegen das Kühlergehäuse werden O-Ringe verwendet. Neben diesen O-Ringen sind ferner spezielle Übergangsstücke und Dichtungsscheiben sowie Schrauben zur Befestigung der Dichtungselemente erforderlich. Im Ergebnis sind etwa 14 Teile erforderlich, um lediglich den Eintritts- und den Austrittsanschluß des Kühlerkernes gegen das Gehäuse abzudichten. Diese Art der Dichtung ist relativ schwierig zusammenzubauen. Ein ähnlicher Ladeluftkühler ist auch durch die US-PS 4,436,145 bekannt geworden.

Ferner ist ein weiterer Nachkühler in der US-PS 3,881,455 beschrieben. Hier finden je zwei Dichtungsscheiben an den gegenüberliegenden Seiten des Kühlerkernes an dessen Eintrittsenden Verwendung. Die Dichtungsscheiben und der Kühlerkern sind durch mehrere Schrauben zwischen einem Eingangskammerteil und dem Kühlergehäuse zusammengedrückt. Auch hier werden viele Einzelteile benötigt, um den Eintrittsanschluß abzudichten.

Die mit der Erfindung zu lösende Aufgabe wird darin gesehen, einen Ladeluftkühler der eingangs genannten Art anzugeben, bei dem die Dichtung zwischen dem Kühlmitteleintritts und Kühlmittelaustrittsanschluß des Kühlerkernes und dem Kühlergehäuse einfach und mit möglichst wenig Teilen verwirklicht werden kann. Ferner soll eine geeignete Dichtung bereitgestellt werden, die vorzugsweise auch bei rauhen Gußoberflächen verwendet werden kann, ohne daß die Dichtoberfläche maschinell bearbeitet werden muß oder eine Nut oder dergleichen zur Aufnahme der Dichtung aufweist. Eine weitere Aufgabe der vorliegenden Erfindung wird in der Angabe eines Verfahrens zum Zusammenbau des Ladeluftkühlers gesehen, bei dem die Dichtung in die richtige Lage gebracht wird.

Die Aufgabe wird erfindungsgemäß dadurch gelöst, daß der Kühlmitteleintrittsanschluß und der Kühlmittelaustrittsanschluß des Kühlerkernes durch eine gemeinsame Öffnung im Kühlergehäuse oder dem Ladeluftverteilerstück aus dem Ladeluftkühler austreten. Es ist eine stark zusammendrückbare Dichtung vorgesehen, die um den Kühlmitteleintritts- und den Kühlmittelaustrittsanschluß angeordnet ist.

Die Dichtung liegt zwischen dem Kühlerkern und der Innenwandung des Kühlergehäuses bzw. dem Ladeluftverteilerstück und dichtet den Ladeluftkühler im Bereich der Öffnung ab. Der Kühlerkern wird gegen die Innenwandung des Gehäuses bzw. des Ladeluftverteilerstückes gepreßt, so daß die Dichtung zusammengedrückt wird. Hierdurch wird eine gute Dichtung zwischen Gehäuse und Kühlerkern erreicht.

Die Dichtung weist vorzugsweise einen außen umlaufenden Wulst auf, der durch einen innenliegenden Versteifungsbereich getragen wird. In dem Versteifungsbereich sind zweckmäßigerweise Durchtrittsöffnungen für die Kühlmittelanschlüsse vorgesehen. Durch die Ausbildung eines Wulstes steht genügend Material zur Verfügung, um eine ausreichende Dichtfläche zu bilden. Die Dichtung besteht aus einem hoch kompressiblen Material, vorzugsweise Silicon. Um auch eine zuverlässige Abdichtung bei einer nicht mechanisch nachbearbeiteten Gußoberflächen des Gehäuses zu erreichen, die beispielsweise eine Rauhigkeitstiefe von bis zu 2,5 mm aufweist, sollte der Wulst sich auf wenigstens 40 % zusammendrücken lassen, ohne zu reißen.

Bei dem erfindungsgemäßen Ladeluftkühler handelt es sich vorzugsweise um einen solchen, bei dem der Kühlerkern einen umlaufenden Flansch mit mehreren zueinander beabstandeten Löchern enthält und der Flansch beidseits mit je einer Dichtungsmanschette abgedeckt ist, welche mehrere mit den Löchern des Flansches fluchtende Löcher aufweisen.

An die eine Dichtungsmanschette schließt sich eine Dichtfläche des Gehäuses und an die andere Dichtungsmanschette schließt sich eine Dichtfläche des Ladeluftverteilerstückes an, wobei sich senkrecht zu den Dichtflächen des Gehäuses bzw. des Ladeluftverteilerstückes Gewindebohrungen bzw. Durchgangslöcher erstrecken, die mit den Löchern im Flansch fluchten und der Verschraubung der Teile des Ladeluftkühlers dienen.

Ein bevorzugtes Verfahren zum Zusammenbau solch eines Ladeluftkühlers besteht darin, daß zunäcnt die Dichtung über die Kühlmittelanschlüsse geschoben wird. Dann wird der Kühlerkern in das Gehäuse eingesetzt und gegen das Ende des Gehäuses gedrückt, an welchem sich die Öffnung befindet, wobei die Dichtung zusammengepreßt wird. In das Gehäuse werden Haltestifte eingeschraubt, die sich durch einen Flansch des Kühlerkernes erstrecken und den Kühlerkern in seiner gegen das Gehäuse angepreßten Lage festhalten. Die Baueinheit aus Gehäuse und Kühlerkern wird dann in ein Ladeluftverteilerstück, beispielsweise den Eingangskrümmer einer Verbrennungskraftmaschine, eingesetzt und mit diesem durch Befestigungsschrauben verschraubt. Die Haltestifte können nun wieder entfernt werden. In die hierdurch frei gewordenen Löcher können weitere Befestigungsschrauben eingedreht werden.

Der erfindungsgemäße Ladeluftkühler weist einen sehr einfachen Aufbau auf, bei dem lediglich ein Teil, nämlich eine Dichtung erforderlich ist, um die Anschlüsse des Kühlerkernes gegen das Gehäuse des Ladeluftkühlers abzudichten. Der Zusammenbau des Ladeluftkühlers ist einfach und erfordert wenig Zeit.

Weitere bevorzugte Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen der Erfindung näher beschrieben und erläutert werden.

Es zeigt:

Fig. 1 die Explosionsdarstellung eines erfindungsgemäßen Ladeluftkühlers,

Fig. 2 die Aufsicht der Dichtung eines Ladeluft kühlers gemäß Fig. 1,

Fig. 3 die Querschnittsansicht entlag der Linie 3-3 in Fig. 2 und

Fig. 4 - 7 Darstellungen verschiedener Schritte beim Zusammenbau des Ladeluftkühlers gemäß Fig. 1 entsprechend eines bevorzugten Verfahrens.

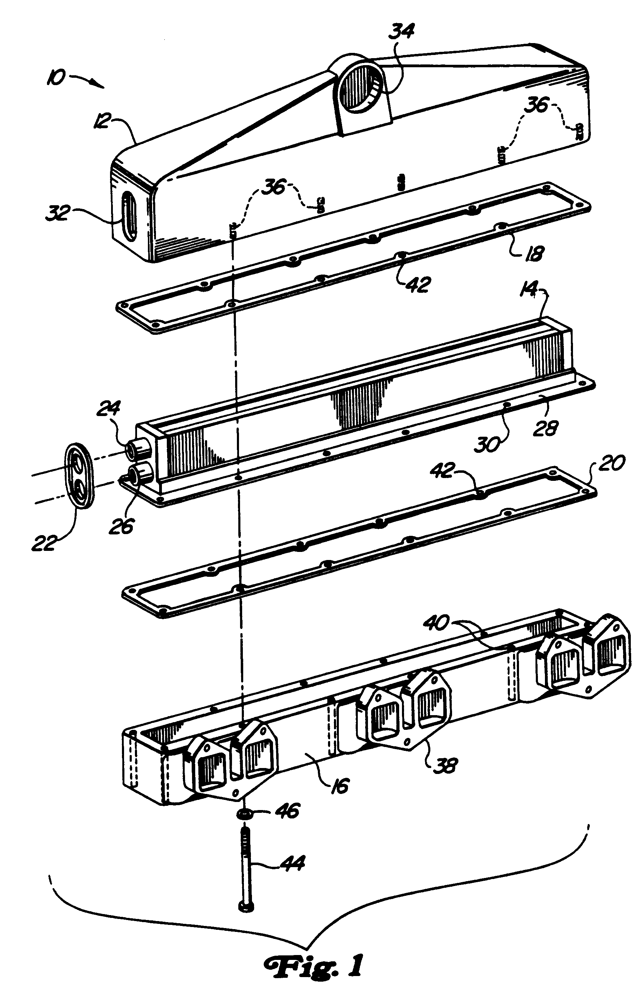

Gemäß Fig. 1 besteht der Ladeluftkühler 10 aus einem Gehäuse 12, einem Kühlerkern 14, einer Ladeluftverteilungsleitung 16, zwei Dichtungsscheiben 18, 20 und einer Ladeluftkühlerdichtung 22. Der Kühlerkern 14 weist an einem Ende sowohl einen Eintrittsstutzen 24 als auch einen Austrittsstutzen 26 auf. Im Betrieb sind der Eintrittsstutzen 24 und der Austrittsstutzen 26 an eine geeignete Kühlmittelquelle angeschlossen. Der Kühlerkern 14 enthält ferner einen Tragflansch 28, welcher sich am Umfang des Kühlerkernes 14 nach außen erstreckt und mehrere zueinander beabstandete Löcher 30 aufweist.

Die Ladeluftkühlerabdeckung 12 enthält eine Öffnung 32, durch welche sich der Eintrittsstutzen 24 und der Austrittsstutzen 26 des Ladeluftkühlers 10 erstrecken können. Sie enthält ferner eine Lufteintrittsöffnung 34, durch welche Luft aus einem Abgasturbolader oder einem Vorverdichter (nicht abgebildet) eintreten kann. In der Bodenfläche der Ladeluftkühlerabdeckung 12 befinden sich mehrere Gewindebohrungen 36, deren Lagen mit den Lagen der Löcher 30 im Kühlerkern 14 korrespondieren.

Die Ladeluftverteilungsleitung 16 enthält mehrere Luftaustrittsöffnungen 38, die an die Lufteintrittsöffnungen einer Brennkraftmaschine anschließbar sind und mehrere Durchgangslöcher 40, die mit den Löchern 30 des Tragflansches 28 fluchten.

Die Dichtungsscheiben 18, 20 sind so bemessen, daß sie zum Tragflansch 28 passen. Auch sie haben jeweils mehrere Löcher 42, die mit den Löchern 30 des Tragflansches 28 fluchten.

Es ist ohne weiteres ersichtlich, daß sich nach einem Zusammenbau mehrere Sechskantschrauben 44 durch die Durchgangslöcher 38 und die Löcher 30, 42 in die Gewindebohrungen 36 erstrecken können, um die Ladeluftkühlerabdeckung 12, die Dichtungsscheiben 18, 20 und den Kühlerkernflansch 28 mit der Ladeluftverteilungsleitung 16 zu verbinden und eine eng anliegende Dichtung zwischen den Teilen herzustellen. Vorzugsweise sind den Sechskantschrauben 44 Befestigungsscheiben 46 beigestellt, wie es dargestellt wurde. Um die Darstellung übersichtlich zu halten, wurde lediglich eine Schraube 44 und eine Scheibe 46 dargestellt. Tatsächlich ist natürlich jeder Bohrung 36 und jedem Loch 30, 40, 42 eine Schraube 44 und eine Scheibe 46 zuordenbar.

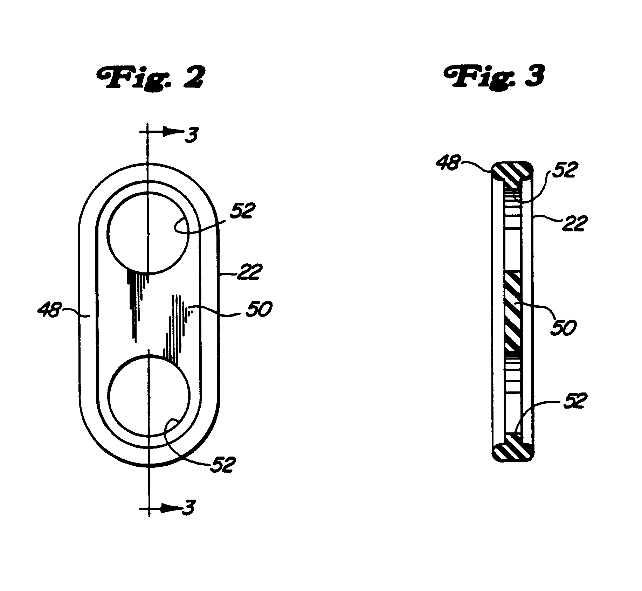

Die Form der Dichtung 22 ist gewöhnlich der Öffnung 32 angepaßt. Dies bedeutet im vorliegenden Fall, daß die Dichtung 22 etwa elliptisch ausgebildet ist. Wie aus den Fig. 2 und 3 hervorgeht, ist die äußere Kante der Dichtung 22 als Wulst 48 ausgebildet. Über das Innere der Dichtung 22 erstreckt sich ein flacher Bereich 50, der als Versteifung den Wulst 48 trägt. In dem flachen Bereich befinden sich zwei Löcher 52, die in Größe und Lage dem Austritts- und dem Eintrittsstutzen 24, 26 des Kühlerkernes 14 entsprechen. Die Dichtung 22 besteht aus hochkompressiblem Material, z. B. Silicon. Der Wulst 48 ist derart bemessen, daß er sich beim Zusammenpressen der Dichtung 22 ausbreitet und eine ausgedehnte Dichtung bildet. Die genaue Größe des Wulstes 48 hängt von der Rauheit der zu dichtenden Oberfläche ab. Bei einer typischen Gußoberfläche mit einer Oberflächenschwankungsbreite von bis zu 2,5 mm, muß sich für eine ausreichende Dichtung der Wulst auf wenigstens 40 % zusammendrücken lassen, ohne zu reißen.

Der Ladeluftkühler 10 gemäß der vorliegenden Erfindung ist so ausgebildet, daß beim Zusammenbau ein ausreichender Druck auf die Dichtung 22 ausgeübt wird, indem die Lage der Teile bei zusammengedrückter Dichtung 22 durch die relative Lage der Bohrungen 30, 36, 40, 42 zueinander fixiert wird. Ein bevorzugtes Verfahren hierfür wird im folgenden beschrieben:

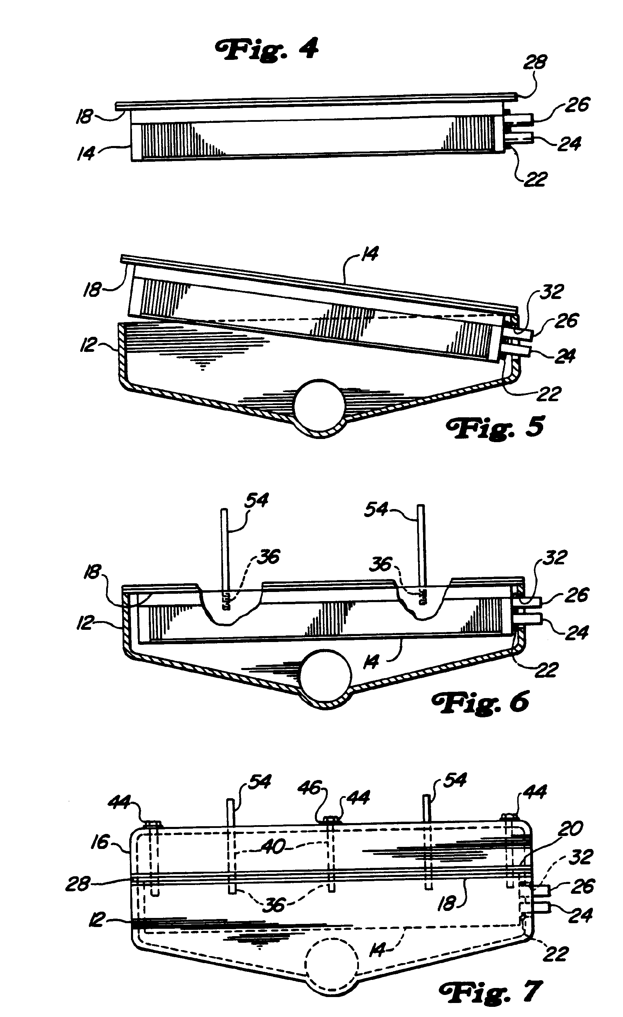

Gemäß Fig. 4 wird die Dichtungsmanschette 18 über der Oberseite des Kühlerkernes 14 so angeordnet, daß sie auf dem Flansch 28 ruht und die Löcher 30, 42 fluchten. Dann wird die Dichtung 22 über Austritts- und Eintrittsstutzen 24, 26 des Kühlerkernes 14 geschoben. Die Löcher 52 in der Dichtung 22 sollen dabei die Dichtung 22 auf dem Kühlerkern 14 genau ausrichten.

Wie aus Fig. 5 ersichtlich, wird dann dieser aus mehreren Teilen bestehender Aufbau in das Ladeluftkühlergehäuse 12 eingesetzt, wobei Austritts- und Eintrittsstutzen 24, 26 durch die Öffnung 32 aus dem Gehäuse 12 herausragen. Hierauf wird der Kühlerkern 14 in die Richtung des Endes des Gehäuses 12 gedrückt, an dem die Öffnung 32 liegt, so daß die Dichtung 22 zusammengepreßt wird.

Entsprechend Fig. 6 werden jetzt Montagebolzen 54 durch die Löcher 30, 42 gesteckt und in die Gewindebohrungen 36 eingeschraubt, um den Kühlerkern 14 genau in seiner relativen Lage zum Ladeluftkühlergehäuse 12 festzuhalten zu können.

Gemäß Fig. 7 wird der vormontierte Aufbau auf die Dichtungsscheibe 20 und die Ladeluftverteilungsleitung 16 aufgesetzt, wobei sich die Montagebolzen 54 durch entsprechende Löcher 42 in der Dichtungsscheibe 20 und Löcher 40 in der Ladeluftverteilungsleitung 16 erstrecken. Jetzt werden durch die Durchgangslöcher 40 und die Löcher 30, 42 Sechskantschrauben 44 gesteckt und in die Gewindebohrungen 36 eingeschraubt und angezogen, wobei die gesamte Anordnung luftdicht zusammengehalten wird. Hierrauf werden die Montagebolzen 54 entfernt und durch weitere Sechskantschrauben 44 ersetzt.

Es ist ersichtlich, daß der gesamte Ladeluftkühler aus einem Minimum an Teilen besteht. Dies führt zu einer Reduzierung sowohl der Teilekosten als auch der Montagezeit.

Gemäß hier nicht näher beschriebener Ausführungsbeispiele können zusätzlich zu dem jeweils einen Eintritts- und Austrittsstuzens 18, 20 weitere Rohre vorgesehen sein. Ferner können der Eintritts- und der Austrittsstutzen 24, 26 als ein in sich unterteiltes Rohr ausgebildet sein. Die Dichtung 22 kann auch in einem Ladeluftkühler Anwendung finden, der auf eine andere, als die beschriebene Weise zusammengehalten wird, wobei lediglich vorausgesetz wird, daß ein ausreichender Druck auf die Dichtung 22 ausgeübt werden kann.

## Patentansprüche

1. Ladeluftkühler mit einem Gehäuse (12), welches wenigstens eine Lufteintrittsöffnung (34) aufweist, und einem Ladeluftverteilerstück (16), welches Luftaustrittsöffnungen (38) aufweist, wobei das Gehäuse (12) und das Ladeluftverteilerstück (16) miteinander mittels Dichtungen (18, 20) luftdicht verschraubbar sind und in ihrem Innern einen Kühlerkern (14) aufnehmen, welcher wenigstens einen Eintrittsstutzen (26) und einen Austrittsstutzen (24) zur Kühlmittelversorgung aufweist, wobei die durch das Gehäuse (12) bzw. das Ladeluftverteilerstück (16) verlaufenden Durchtrittsstellen des Eintrittsstutzens (26) und des Austrittsstutzens (24) luftdicht abgedichtet sind, dadurch gekennzeichnet, daß entweder das Gehäuse (12) oder das Ladeluftverteilerstück (16) eine Öffnung (32) für den gemeinsamen Durchtritt des Kühlmitteleintritts- und des Kühlmittelaustrittsanschlusses (24, 26) aufweist und daß eine stark zusammendrückbare Dichtung (22) vorgesehen ist, die sowohl den Kühlmitteleintrittsals auch den Kühlmittelaustrittsanschluß (24, 26) umschließt und zwischen dem Kühlerkern (14) und einer Innenwandung des Gehäuses (12) oder des Ladeluftverteilerstückes (16) zusammengepreßt ist und die Öffnung (32) abdichtet.

2. Ladeluftkühler nach Anspruch 1, dadurch gekennzeichnet, daß der Kühlerkern (14) einen umlaufenden Flansch (28) mit mehreren zueinander beabstandeten Löchern (30) enthält, daß der Flansch (28) beidseits mit je einer Dichtungsmanschette (18, 20) abgedeckt ist, welche mehrere mit den Löchern (30) des Flansches (28) fluchtende Löcher (42) aufweisen, und daß sich an die eine Dichtungsmanschette (18) eine Dichtfläche des Gehäuses (12) und an die andere Dichtungsmanschette (20) eine Dichtfläche des Ladeluftverteilerstückes (16)

EP 0 343 565 B1

anschließt, wobei sich senkrecht zu den Dichtflächen des Gehäuses bzw. des Ladeluftverteilerstückes Gewindebohrungen (36) bzw. Durchgangslöcher 40 erstrecken, die mit den Löchern (30) im Flansch (28) fluchten und der Verschraubung der Teile des Ladeluftkühlers dienen.

3. Ladeluftkühler nach Anspruch 1 oder 2, dadurch gekennzeichnet, daß die Dichtung (22) einen außen umlaufenden Wulst (48) aufweist, der von einem inneren Aussteifungsbereich (50) getragen wird und daß der innere Bereich (50) zwei Ausnehmungen (52) für die Kühlmittelanschlüsse (24, 26) aufweist, die in Form und Lage dem Kühlmitteleintritts- und dem Kühlmittelaustrittsanschluß (24, 26) angepaßt sind.

4. Ladeluftkühler nach einem der Ansprüche 1 bis 3, dadurch gekennzeichnet, daß der Bereich des Gehäuses (12), oder des Ladeluftverteilerstückes (16) gegen den die Dichtung (22) anliegt, eine Gußoberfläche ist.

5. Ladeluftkühler nach Anspruch 4, dadurch gekennzeichnet, daß die Gußoberfläche eine Oberflächenrauhigkeit mit einer Schwankungstiefe von bis zu 2,5 mm aufweist.

6. Ladeluftkühler nach einem der Ansprüche 1 bis 5, dadurch gekennzeichnet, daß die Dichtung (22) ohne zu reißen eine Kompressibilität von wenigsten 40 % aufweist.

7. Ladeluftkühler nach einem der Ansprüche 1 bis 6, dadurch gekennzeichnet, daß die Dichtung (22) aus Silicon besteht.

8. Verfahren zum Zusammenbau eines Ladeluftkühlers, bei dem das Gehäuse (12) eine Öffnung (32) für den Eintrittsstutzen (26) und den Austrittsstutzen (24) aufweiset, nach einem der Ansprüche 1 bis 7, dadurch gekennzeichnet, daß die erste Dichtungsscheibe (18) auf den Flansch (28) des Kühlerkernes (14) aufgelegt wird, daß die Dichtung (22) über den Kühlmitteleintritts- und den Kühlmittelaustrittsanschluß (24, 26) geschoben wird, daß der Aufbau aus Kühlerkern (14), erster Dichtungsscheibe (18) und Dichtung (22) in das Gehäuse (12) eingesetzt wird, daß der Kühlerkern (14) in die Richtung der Seite des Gehäuses (12) gedrückt wird, an der sich die Öffnung (32) befindet, wobei die Dichtung (22) zusammengepreßt wird, daß Montagegewindestifte (54) durch einige der Löcher (30, 42) in dem Flansch (28) und der ersten Dichtungsscheibe (18) gesteckt und in die Gewindelöcher (36) eingeschraubt werden, um den Kühlerkern (14) in der die Dichtung (22) zusammenpressenden Lage festzuhalten, daß der aus Kühlerkern (14), Dichtungsscheibe (18), Dichtung (22), Gehäuse (12) und Montagegewindestifte (54) bestehende Aufbau auf die zweite Dichtungsscheibe (20) und das Ladeluftverteilerstück (16) aufgesetzt wird, wobei sich die Montagegewindestifte (54) durch Löcher (42) der zweiten Dichtungsscheibe (20) und Durchgangslöcher (40) des Ladeluftverteilerstückes (16) erstrekken, um eine genaue Lageausrichtung der Teile zueinander zu erreichen, und daß durch die noch freien Löcher (30, 42) und Durchgangslöcher (40) Befestigungsschrauben (44) gesteckt und in die Gewindelöcher (36) eingeschraubt werden, so daß die genannten Teile zu einer Baueinheit zusammengespannt werden.

9. Verfahren nach Anspruch 8, dadurch gekennzeichnet, daß die Montagegewindestifte (54) nach dem Zusammenbau des Ladeluftkühlers (10) wieder entfernt werden.

10. Verfahren nach Anspruch 8 oder 9, dadurch gekennzeichnet, daß nach dem Zusammenbau des Ladeluftkühlers (10) die Montagegewindestifte (54) durch Befestigungsschrauben (44) ersetzt werden.

11. Ladeluftkühler nach einem der Ansprüche 1 bis 7, dadurch gekennzeichnet, daß das Dichtungsteil einen stark zusammendrückbaren, außen umlaufenden Wulst (48) aufweist, der von einem inneren, im wesentlichen flachen Versteifungsbereich (50) getragen wird und daß sich durch den inneren Versteifungsbereich (50) wenigstens eine Ausnehmung (52) zur Aufnahme wenigstens eines Kühlmittelanschlusses (24, 26) des Kühlerkernes (14) erstreckt.

**Claims**

1. A charging air cooler with a housing (12) having at least one air inlet opening (34), and a charging air distribution manifold (16) which has air outlet openings (38), wherein the housing (12) and the charging air distribution manifold (16) screw together in airtight manner by means of seals (18, 20) and receive a cooling core (14) inside, which has at least one inlet union (26) and outlet union (24) for the coolant supply, wherein the passages through the housing (12) or the charging air distribution manifold (16) of the inlet union (26) and outlet union (24) are sealed in airtight manner, characterized in that either the housing (12) or the charging air distribution manifold (16) has one opening (32) for the common passage of the coolant inlet and outlet unions (24, 26) and in that a highly compressible seal (22) is provided, which surrounds both the coolant inlet and outlet unions (24, 26) and is compressed between the cooling core (14) and an inner wall of the housing (12) or the charging air distribution manifold (16) and seals the opening (32).

2. Charging air cooler according to claim 1, characterized in that the cooling core (14) has a surrounding flange (28) with a plurality of spaced holes (30), in that the flange (28) is covered on both sides with a respective sealing gasket (18, 20), which has a plurality of holes (42) registering with the holes (30) of the flange (28),

5

and in that a sealing face of the housing (12) is applied to one sealing gasket (18) and a sealing face of the charging air distribution manifold (16) to the other sealing gasket (20), wherein threaded bores (36) or through holes (40) extend perpendicular to the sealing faces of the housing and the charging air distribution manifold, in register with the holes (30) in the flange, (28) and serve for screwing together the parts of the charging air cooler.

3. Charging air cooler according to claim 1 or 2, characterized in that the seal (22) has an outer surrounding bead (48) which is carried by an inner stiffening region (50) and in that the inner region (50) has two apertures (52) for the coolant unions (24, 26) and which are matched to the shape and position of the coolant inlet and outlet unions (24, 26).

4. Charging air cooler according to any of claims 1 to 3, characterized in that the region of the housing (12) or of the charging air distribution manifold (16) against which the seal (22) bears is a casting surface.

5. Charging air cooler according to claim 4, characterized in that the casting surface has a surface roughness with a fluctuation in depth of up to 2.5 mm.

6. Charging air cooler according to any of claims 1 to 5, characterized in that the seal (22) is compressible by at least 40% without tearing.

7. Charging air cooler according to any of claims 1 to 6, characterized in that the seal (22) consists of a silicone.

8. A method of assembling a charging air cooler, in which the housing (12) has an opening (32) for the inlet union (26) and the outlet union (24), according to any of claims 1 to 7, characterized in that the first sealing gasket (18) is applied to the flange (28) of the cooling core (14), in that the seal (22) is pushed over the coolant inlet and outlet unions (24, 26), in that the assembly of the cooling core (14), first sealing gasket (18) and seal (22) is fitted into the housing (12), in that the cooling core (14) is pushed towards the side of the housing (12) where the opening (32) is located, whereby the seal (22) is compressed, in that threaded assembly studs (54) are pushed through some of the holes (30, 42) in the flange (28) and the first sealing gasket (18) and screwed into the threaded holes (36), in order to retain the cooling core (14) in the position compressing the seal (22), in that the assembly consisting of the cooling core (14), sealing gasket (18), seal (22), housing (12) and threaded assembly studs (54) is fitted on to the second sealing gasket (20) and the charging air distribution manifold (16), so that the threaded assembly studs (54) pass through holes (42) of the second sealing gasket (20) and through-holes (40) of the charging air distribution manifold (16), in order to obtain an accurate alignment of the parts, and in that fixing screws (44) are pushed through the holes (30, 42) and through-holes (40) which are still free and screwed into the threaded holes (36), so that the said parts are tightened together into a unit.

9. Method according to claim 8, characterized in that the threaded mounting studs (54) are removed after the assembly of the charging air cooler (10).

10. Method according to claim 8 or 9, characterized in that the threaded mounting studs (54) are replaced by fixing screws (44) after the assembly of the charging air cooler (10).

11. Charging air cooler according to any of claims 1 to 7, characterized in that the sealing part has a highly compressible bead (48) extending round the outside and which is carried by a substantially elat stiffening region (50) and in that at least one aperture (32) extends through the inner stiffening region (50) to receive at least one coolant union (24, 26) of the cooling core (14).

**Revendications**

1. Refroidisseur d'air de suralimentation, comprenant un boîtier (12) présentant au moins une ouverture d'entrée d'air (34) et un élément répartiteur d'air de suralimentation (16) présentant des ouvertures de sortie d'air (38), le boîtier (12) et l'élément répartiteur d'air de suralimentation (16) pouvant être assemblés par vissage de manière étanche à l'air à l'aide de garnitures d'étanchéité (18,20), et recevant à l'intérieur un corps de refroidisseur (14) qui présente au moins un raccord d'entrée (26) et un raccord de sortie (24) pour l'alimentation en réfrigérant, les points de passage du raccord d'entrée (26) et du raccord de sortie (24) à travers le boîtier (12) ou l'élément répartiteur d'air de suralimentation (16) étant rendus étanches à l'air, caractérisé en ce que le boîtier (12) ou bien l'élément répartiteur d'air de suralimentation (16) présente une ouverture (32) pour le passage commun du raccord d'entrée et du raccord de sortie de réfrigérant (24, 26), et en ce qu'est prévue une garniture d'étanchéité fortement compressible (22), qui entoure à la fois le raccord d'entrée et le raccord de sortie de réfrigérant (24, 26) et est comprimée entre le corps de refroidisseur (14) et une paroi intérieure du boîtier (12) ou de l'élément répartiteur d'air de suralimentation (16) et assure l'étanchéité de l'ouverture (32).

2. Refroidisseur d'air de suralimentation selon la revendication 1, caractérisé en ce que le corps de refroidisseur (14) contient une bride entourante (28) pourvue de plusieurs trous mutuellement distants (30), en ce que la bride (28) est recouverte de chaque côté d'une manchette d'étanchéité respective (18, 20), les man-

EP 0 343 565 B1

chettes d'étanchéité (18, 20) présentant des trous (42) alignés avec les trous (30) de la bride (28), et en ce qu'une face d'étanchéité du boîtier (12) se raccorde à une manchette d'étanchéité (18) et une face d'étanchéité de l'élément répartiteur d'air de suralimentation (16) à l'autre manchette d'étanchéité (20), des trous taraudés (36) et des trous traversants (40) s'étendant perpendiculairement aux faces d'étanchéité, respectivement du boîtier et de l'élément répartiteur d'air de suralimentation, et étant alignés avec les trous (30) de la bride (28) et servant à l'assemblage vissé des éléments du refroidisseur d'air de suralimentation.

3. Refroidisseur d'air de suralimentation selon la revendication 1 ou 2, caractérisé en ce que la garniture d'étanchéité (22) présente un bourrelet extérieurement entourant (48) qui est porté par une région de renforcement intérieure (50), et en ce que la région intérieure (50) présente deux évidements (52) pour les raccords de réfrigérant (24, 26), dont la forme et la position sont adaptées au raccord d'entrée et au raccord de sortie de réfrigérant (24, 26).

4. Refroidisseur d'air de suralimentation selon l'une des revendications 1 à 3, caractérisé en ce que la région du boîtier (12) ou de l'élément répartiteur d'air de suralimentation (16) contre laquelle s'applique la garniture d'étanchéité (22), est une surface de fonte.

5. Refroidisseur d'air de suralimentation selon la revendication 4, caractérisé en ce que la surface de fonte présente une rugosité de surface d'amplitude pouvant atteindre 2,5 mm.

6. Refroidisseur d'air de suralimentation selon l'une des revendications 1 à 5, caractérisé en ce que la garniture d'étanchéité (22) présente une compressibilité d'au moins 40% sans déchirure.

7. Refroidisseur d'air de suralimentation selon l'une des revendications 1 à 6, caractérisé en ce que la garniture d'étanchéité (22) est réalisée en silicone.

8. Procédé d'assemblage d'un refroidisseur d'air de suralimentation, dont le boîtier (12) présente une ouverture (32) pour le raccord d'entrée (26) et le raccord de sortie (24), selon l'une des revendications 1 à 7, caractérisé en ce que la première rondelle d'étanchéité (18) est posée sur la bride (28) du corps de refroidisseur (14), en ce que la garniture d'étanchéité (22) est enfilée sur le raccord d'entrée et le raccord de sortie de réfrigérant (24, 26), en ce que l'ensemble constitué du corps de refroidisseur (14), de la première rondelle d'étanchéité (18) et de la garniture d'étanchéité (22) est inséré dans le boîtier (12), en ce que le corps de refroidisseur (14) est pressé en direction du côté du boîtier (12) sur lequel se trouve l'ouverture (32), la garniture d'étanchéité (22) étant alors comprimée, en ce que des axes filetés de montage (54) sont enfilés dans quelques-uns des trous (30, 42) de la bride (28) et de la première rondelle d'étanchéité (18) et sont vissés dans les trous taraudés (36) afin de maintenir le corps de refroidisseur (14) bloqué dans la position comprimant la garniture d'étanchéité (22), en ce que l'ensemble constitué du corps de refroidisseur (14), de la rondelle d'étanchéité (18), de la garniture d'étanchéité (22), du boîtier (12) et des axes filetés de montage (54) est posé sur la seconde rondelle d'étanchéité (20) et l'élément répartiteur d'air de sur alimentation (16), les axes filetés de montage (54) traversant alors des trous (42) de la seconde rondelle d'étanchéité (20) et des trous traversants (40) de l'élément répartiteur d'air de suralimentation (16), afin d'obtenir un alignement précis des éléments entre eux, et en ce que des vis de fixation (44) sont enfilées à travers les trous (30, 42) encore libres et les trous traversants (40) et sont vissées dans les trous taraudés (36), de sorte que les éléments précités sont mutuellement serrés en une unité constructive.

9. Procédé selon la revendication 8, caractérisé en ce que les axes filetés de montage (54) sont déposés une fois le refroidisseur d'air de suralimentation (10) assemblé.

10. Procédé selon la revendication 8 ou 9, caractérisé en ce qu'une fois le refroidisseur d'air de suralimentation (10) assemblé, les axes filetés de montage (54) sont remplacés par des vis de fixation (44).

11. Refroidisseur d'air de suralimentation selon l'une des revendications 1 à 7, caractérisé en ce que la garniture d'étanchéité présente un bourrelet extérieurement entourant fortement compressible (48) qui est porté par une région de renforcement intérieure (50) sensiblement plate, et en ce qu'au moins un évidement (52), destiné à recevoir au moins un raccord de réfrigérant (24, 26) du corps de refroidisseur (14), s'étend à travers la région de renforcement intérieure (50).

7

Fig. 1

## Fig. 2

## Fig. 3

## Fig. 4

## Fig. 5

## Fig. 6

## Fig. 7